# EUROPÄISCHE PATENTSCHRIFT

(11) **EP 0 599 079 B1**
(45) Veröffentlichungstag und Bekanntmachung des Hinweises auf die Patenterteilung: **23.04.2003**
(21) Anmeldenummer: 93117538.4
(22) Anmeldetag: 29.10.1993
(51) Int. Cl.: G06K 19/077, G06K 19/04

(54) **Sicherheitsausweiskarte**
Security access card
Carte d'accès de sécurité

(30) Priorität: 24.11.1992 DE 4239398
(43) Veröffentlichungstag der Anmeldung: 01.06.1994
(73) Patentinhaber: Orga-Kartensysteme GmbH, 33104 Paderborn (DE)
(72) Erfinder: Prochàzka, Ottomar, CZ-101 00 Praha 10 (CZ)
(74) Vertreter: Hanewinkel, Lorenz, Dipl.-Phys.

(56) Entgegenhaltungen:
- WO-A-90/16046
- DE-C- 4 040 296
- GB-A- 2 246 500

## Beschreibung

Die Erfindung betrifft eine Ausweiskarte zum Einführen in eine Einführöffnung eines Datenverarbeitungsgerätes, die ein Normformat aufweist und mindestens einen Datenträger, insbesondere einen integrierten Schaltkreis mit Kontakten, um ein Standardpositionsmaß von einer Normmaßbezugskante beabstandet trägt und die darüberhinaus randseitig über eine Sollbruchstelle mit einem abtrennbaren Fortsatz verbunden ist, wobei sich der Fortsatz seitlich über die Längsseite der Ausweiskarte derartig breit erstreckt, daß er übliche seitliche Toleranzen der Einführöffnung überschreitet, und/oder der Fortsatz sich von der Schmalseite der Ausweiskarte von einer Normmaßbezugskante mit einer solchen Länge erstreckt, daß dadurch, eingebracht in das Datenverarbeitungsgerät, die Kontakte des Schaltkreises oder die Datenposition auf dem Datenträger so weit außerhalb ihres Standardpositionsmaßes liegen, daß ein Lesen der Daten in dem Datenverarbeitungsgerät der betreffenden Norm verhindert ist.

Eine derartige Ausweiskarte ist aus der DE 40 40 296 C1 bekannt. Bei dieser ist eine genormte Miniaturchipkarte mittels einer Sollbruchstelle an einer normalen Ausweiskarte angebracht, die diese jedoch dreiseitig freigeschnitten, allseitig rahmenartig umgibt. Ein solcher Rahmen bedeutet eine erheblichen Materialaufwand, insbesondere wenn der Rahmen um eine Standardkarte angeordnet ist. Es besteht nämlich beim Versand üblicher Karten ein Sicherheitsrisiko darin, daß diese Karten von unbefugten Personen zu Lasten des jeweiligen Empfängers bereits benutzt werden. Ein Nachweis für eine solche unbefugte Nutzung ist durch den späteren Empfänger nur selten zu erbringen.

Es ist Aufgabe der Erfindung, mit gegenüber der vorbezeichneten Ausweiskarte geringerem Materialaufwand eine Sicherheitsausweiskarte zu schaffen, die für eine Erstbenutzung äußerlich erkennbar verändert werden muß.

Die Lösung der Aufgabe besteht darin, daß sich höchstens an einer von zwei gegenüberliegenden Seiten der Karte ein Fortsatz erstreckt und kürzer als oder gleich lang wie diese Seite ist und nur eine geringe Breite im Vergleich mit der Breite der Ausweiskarte, aber von wenigstens 5 mm oder nur eine geringe Länge im Vergleich mit der Länge der Ausweiskarte hat.

Durch die Erfindung ist sichergestellt, daß die Ausweiskarte nicht in den Einführschlitz eines Datenverarbeitungsgerätes eingebracht werden kann, soweit der Fortsatz entlang der Längsseite angeordnet ist, da die Karte gewöhnlich mit ihrer Schmalseite in den Einführschlitz eingebracht wird. Ein Mißbrauch durch Unbefugte erfordert somit die Abtrennung des Fortsatzes, so daß dieser bei einer späteren Auslieferung an den Berechtigten fehlt oder zumindest teilweise abgelöst ist.

Alternativ oder sowohl als auch läßt sich ein Fortsatz auch an der stirnseitigen Bezugskante der Datenträgerkarte anordnen. Wenn dieser lang genug ist, dann ist es unmöglich, die Daten aus dem Datenträger, z.B. einem Magnetstreifen oder einem Speicherchip, auszulesen, da die Datenposition auf dem Streifen nicht der Normposition entspricht bzw. die Kontaktiervorrichtung der Lesevorrichtung die Kontakte des Speicherchips nicht trifft.

Der Fortsatz kann über einen schmalen Steg mit der Ausweiskarte verbunden sein, wobei sich ein- oder beidseitig des Steges eine keilförmige Nut befindet, die eingeschnitten oder unmittelbar beim Spritzen der Ausweiskarte aus Kunststoff einbracht ist. Alternativ sind einzelne dünne Stege zwischen der Karte und dem als eine Abreißlasche ausgebildeten Fortsatz gespritzt oder freigestanzt.

Falls die Karte aus mehreren Lagen durch Kaschieren hergestellt ist, ist es zweckmäßig, mehrere der Schichten zu durchtrennen und nur eine dünne Schicht, z.B. die Deckschicht, zwischen dem Fortsatz und der Karte stehen zu lassen. Die Deckschicht läßt sich dann leicht durchtrennen.

Eine vorteilhafte Ausführung des Fortsatzes besteht darin, daß sie um eine der Ecken der Karten herumgeführt ist, so daß die Abreißkante nicht geradlinig verläuft sondern um die Ecke herum. Auf diese Weise ist es unmöglich, den Fortsatz scharnierartig um die Sollbruchstelle herumzuklappen, so daß auch dann ein Einführen der Karte in die Bearbeitungsstation unmöglich ist, wenn diese eine doppelte Dicke der Karte im Randbereich tolerieren würde.

Vorteilhafte Ausgestaltungen sind in den Figuren 1 bis 4 dargestellt.
- Fig. 1: zeigt schematisch ein Datenverarbeitungsgerät mit einer einzuschiebenden Ausweiskarte;
- Fig. 2: zeigt einen Abschnitt einer Ausweiskarte mit einem Fortsatz;
- Fig. 3: zeigt einen Querschnitt einer kaschierten Ausweiskarte, abschnittsweise vergrößert;
- Fig. 4: zeigt eine Ecke einer Ausweiskarte mit einem herumgeführten Fortsatz.

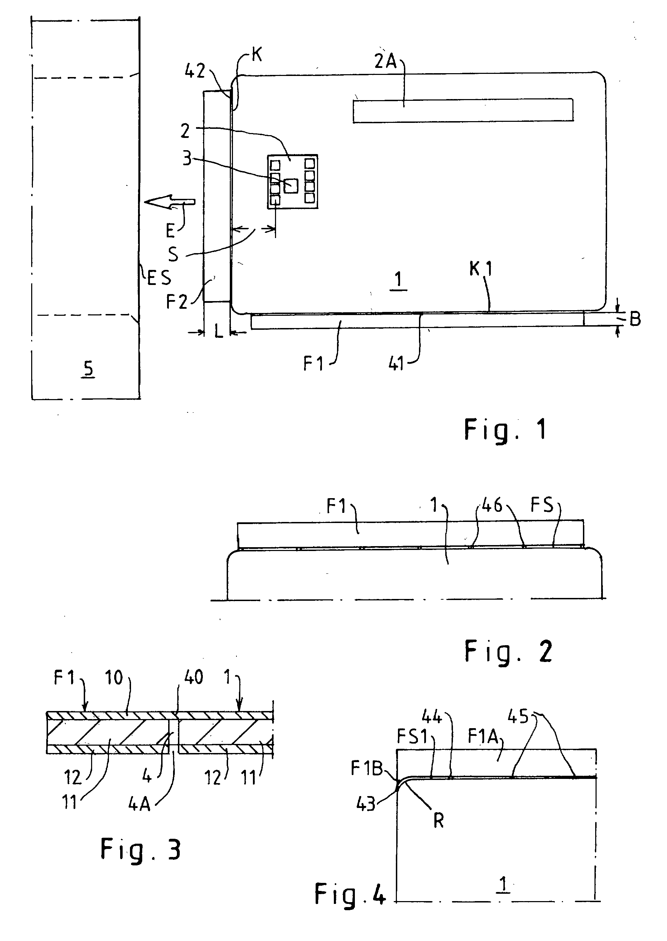

Figur 1 zeigt eine Ausweiskarte (1), die in bekannter Weise einen Datenträger (2, 2A) beinhaltet, wobei beispielsweise ein Speicherchip (3) mit einer diesen umgebenden Kontaktanordnung vorgesehen ist und/oder ein magnetischer oder optischer Datenträgerstreifen (2A) parallel zur Längskante angeordnet ist. Hierbei ist es vorgesehen, daß von einer Stirnseite aus, die als Normmaßbezugskante (K) dient, das Kontaktfeld des Datenträgers (2) in einem Standardpositionsmaß (S) entfernt angeordnet ist. Weiterhin weisen die Kontakte sowie der Datenträger (2A) bestimmt genormte Maßabstände zu den Längskanten der Datenträgerkarte auf.

Bei ihrer Verwendung wird die Ausweiskarte (1) in einen Einführschlitz (ES) eines Datenverarbeitungsgerätes (5) eingebracht, wobei die Einführrichtung (E) gewöhnlich durch die stirnseitige Maßbezugskante (K) bestimmt ist, welche voran in das Datenverarbeitungsgerät (5) einzuschieben ist. Einführseitig weist das Datenverarbeitungsgerät (5) im allgemeinen eine leicht erweiterte trichterförmige Öffnung (ES) auf, die sich dann in ihrer Breite bis auf ein geringes Toleranzübermaß bezüglich der Kartenbreite verringert. Auf diese Weise verhindert ein seitlich angebrachter Fortsatz (F1) das Einschieben einer Ausweiskarte, solange dieser Fortsatz (F1) nicht abgetrennt ist. Zum leichten und genauen Abtrennen ist eine Sollbruchstelle (41) vorgesehen, welche als Einkerbung eingeritzt oder spritztechnisch hergestellt ist. Die Breite (B) des Fortsatzes (F1) ist so gewählt, daß ein Einschieben der Karte auch bei den üblichen seitlichen Toleranzen der Einführöffnung nicht möglich ist. Eine Breite von 5 mm hat sich als ausreichend erwiesen und bietet eine ausreichende Handhabbarkeit zum Abbrechen und Abreißen des Fortsatzes (F1).

Alternativ oder auch gleichzeitig kann an der stirnseitigen Maßbezugskante (K) ein Fortsatz (F2) als Abreißlasche angeordnet sein, wobei sich die Sollbruchstelle (42) an der Bezugskante (K) befindet. Hierbei ist vorzusehen, daß die Länge (L) des Fortsatzes (F2) so groß gewählt ist, daß die Kontakte eines Datenträgerchips (3) oder die Informationsdaten eines Magnetstreifens (2A) oder optischen Datenträgers bezüglich ihrer Anfangsposition ausreichend außerhalb ihrer Standardposition liegen, so daß ein Lesen der Daten vollständig verhindert wird.

Figur 2 zeigt eine Ausweiskarte (1), bei der der Fortsatz (F1) durch Freistanzungen (FS) bis auf Verbindungsstege (46) freigeschnitten ist.

Figur 3 zeigt einen vergrößerten Ausschnitt eines Kartenquerschnittes, welcher aus zwei Deckschichten (10, 12) und einer mittleren Schicht (11) durch Kaschieren zusammengesetzt ist. Hierbei ist der Fortsatz (F1) nur mittels des Deckschichtbereichs (40) einer dünnen Deckschicht (10) mit dem Bereich der Karte (1) verbunden. Die anderen beiden Schichten (11, 12) sind durch einen Einschnitt (4, 4A) im Bereich der Sollbruchstelle bereits getrennt.

Figur 4 zeigt einen Eckabschnitt einer Ausweiskarte (1). Hierbei ist die Ecke mit einem Radius (R) gerundet, wie allgemein üblich. Der Fortsatz (F1A) erstreckt sich entlang der Längskante und ist um den gerundeten Eckbereich herumgeführt. Auf diese Weise besteht die Sollbruchstelle aus kleinen Abreißstegen (43, 44, 45), die nicht auf einer Geraden liegen. Zwischen den Stegen liegen Freischnitte (FS1). Der die Ecke umgreifende Fortsatzbereich (F1B), an dessen Ende der Abreißsteg (43) liegt, sichert somit den Fortsatz gegen ein unbemerkbares Umknicken um die Trennstege (44, 45). Es ist vorteilhaft vorgesehen, daß der eckumgreifende Fortsatzbereich (F1B) mit der stirnseitigen Kante der Karte (1) bündig abschließt, so daß bei einer Herstellung der Datenträgerkarte aus Rollenmaterial in Längsrichtung kein Verlust auftritt.

## Patentansprüche

1. Ausweiskarte (1) zum Einführen in eine Einführöffnung (ES) eines Datenverarbeitungsgerätes (5), die ein Normformat aufweist und mindestens einen Datenträger (2, 2A), insbesondere einen integrierten Schaltkreis (3) mit Kontakten, um ein Standardpositionsmaß (S) von einer Normmaßbezugskante (K) beabstandet trägt und die darüberhinaus randseitig über eine Sollbruchstelle (40-46) mit einem abtrennbaren Fortsatz (F1, F2) verbunden ist, wobei sich der Fortsatz (F1) seitlich über die Längsseite der Ausweiskarte derartig breit erstreckt, daß er übliche seitliche Toleranzen der Einführöffnung (ES) überschreitet, und/oder der Fortsatz (F2) sich von der Schmalseite der Ausweiskarte von einer Normmaßbezugskante (K) mit einer solchen Länge (L) erstreckt, daß dadurch, eingebracht in das Datenverarbeitungsgerät (5), die Kontakte des Schaltkreises (3) oder die Datenposition auf dem Datenträger (2A) so weit außerhalb ihres Standardpositionsmaßes (S) liegen, daß ein Lesen der Daten in dem Datenverarbeitungsgerät (5) der betreffenden Norm verhindert ist,
**dadurch gekennzeichnet, daß** sich höchstens an einer von zwei gegenüberliegenden Seiten der Karte ein Fortsatz (F1, F2) erstreckt und kürzer als oder gleich lang wie diese Seite ist und nur eine geringe Breite (B) im Vergleich mit der Breite der Ausweiskarte (1), aber von wenigstens 5 mm oder nur eine geringe Länge (L) im Vergleich mit der Länge der Ausweiskarte (1) hat.

2. Ausweiskarte nach Anspruch 1 **dadurch gekennzeichnet, daß** sie aus Kunststoff gespritzt ist und die Sollbruchstelle (41, 42) als eine gespritzte oder geschnittene Kerbe ausgestaltet ist.

3. Ausweiskarte nach Anspruch 1, **dadurch gekennzeichnet, daß** sie aus Rollenmaterial gestanzt ist und die Sollbruchstelle (4) abschnittweise freigestanzt ist.

4. Ausweiskarte nach Anspruch 1, **dadurch gekennzeichnet, daß** sie aus mehreren Schichten (10, 11, 12) laminiert erstellt ist und entlang der Sollbruchstelle (40) mindestens einer der Schichten (11, 12) getrennt ist und mindestens eine der Schichten (10) über die Sollbruchstelle (40) durchgehend ist.

5. Ausweiskarte nach einem der vorstehenden Ansprüche, **dadurch gekennzeichnet, daß** der Fortsatz (F1A) mindestens eine Ecke der Ausweiskarte (1) umschließt und er entweder mehrere Solbruchstellen (43 - 45) aufweist, die nicht auf einer Geraden liegen, oder nur eine Sollbruchstelle aufweist, die auf einer gebogenen Sollbruchlinie verläuft.

6. Ausweiskarte nach Anspruch 5, **dadurch gekennzeichnet, daß** sich der Fortsatz (F1A) um mindestens eine Rundung (R) der Ecke der Ausweiskarte (1) erstreckt und mit der einen der Ausweiskartenkanten, die an die jeweilige Ecke anschließt, fluchtend abschließt.

## Claims

1. An identity card (1) for insertion into an insertion opening (ES) of a date processing apparatus (5) which is of a standard format and which carries at least one data carrier (2, 2A), in particular an integrated circuit (3) with contacts, spaced from a standard dimension reference edge (K) by a standard positional dimension (S) and which in addition at the edge is connected by way of a desired-rupture location (40 - 46) to a separable extension (F1, F2), wherein the extension (F1) extends laterally beyond the longitudinal side of the identity card by such a width that it exceeds usual lateral tolerances of the insertion opening (ES) and/or the extension (F2) extends from the narrow side of the identity card from a standard dimension reference edge (K) with such a length (L) that thereby, introduced into the data processing apparatus (5), the contacts of the circuit (3) or the data position on the data carrier (2A) are so far outside their standard positional dimension (S) that reading of the data in the data processing apparatus (5) of the standard in question is prevented, **characterised in that** an extension (F1, F2) extends at most at one of two opposite sides of the card and is shorter than or of the same length as said side and is only of a small width (B) in comparison with the width of the identity card (1) but at least 5mm or is only of a small length (L) in comparison with the length of the identity card (1).

2. An identity card according to claim 1 **characterised in that** it is injection moulded from plastic material and the desired-rupture location (41, 42) is in the form of an injection-moulded or cut notch.

3. An identity card according to claim 1 **characterised in that** it is stamped from rolled material and the desired-rupture location (41, 42) is stamped free in a portion-wise manner.

4. An identity card according to claim 1 **characterised in that** it is produced by lamination from a plurality of layers (10, 11, 12) and is separated along the desired-rupture location (40) of at least one of the layers and at least one of the layers is continuous over the desired-rupture location (40).

5. An identity card according to one of the preceding claims **characterised in that** the extension (F1A) embraces at least one corner of the identity card (1) and either it has a plurality of desired-rupture locations (43 - 45) which are not on a straight line or it has only one desired-rupture location which extends on a curved desired-rupture line.

6. An identity card according to claim 5 **characterised in that** the extension (F1A) extends around at least one round configuration (R) of the corner of the identity card (1) and terminates flush with the one of the identity card edges, which adjoins the respective corner.

## Revendications

1. carte d'accès de sécurité à introduire dans une ouverture d'entrée d'un appareil de traitement de données, laquelle carte présente un format standardisé et, au moins, un support de données, notamment un circuit de commutation intégré avec contacts, dont la position est écartée d'une distance standard du bord de référence de dimension standard, et est reliée, sur le bord, à un talon détachable, par l'intermédiaire d'une zone de rupture obligée, ledit talon s'étendant sur la totalité du côté longitudinal de la carte d'accès, sur une largeur telle qu'il dépasse les tolérances latérales habituelles de l'ouverture d'entrée, et /ou le talon s'étendant, à partir du côté étroit de la carte d'accès d'un bord de référence de dimension standard, sur une longueur telle que, lors de l'introduction dans l'appareil de traitement de données, les contacts du circuit de commutation ou la position des données sur le support de données se trouvent ainsi situés tellement en dehors de leur position standard qu'une lecture des données dans l'appareil de traitement de données, répondant au standard concerné, est ainsi empêchée, **caractérisée en ce qu'**un talon (F1, F2) s'étend au moins sur l'un de deux côtés opposés de la carte et est plus court ou aussi long que ledit côté et ne présente, en comparaison avec la largeur de la carte d'accès (1), qu'une faible largeur, cependant d'au moins 5 mm, ou qu'une faible longueur (L) en comparaison avec la longueur de la carte d'accès (1).

2. Carte d'accès selon la revendication 1, **caractérisée en ce qu'**elle est extrudée en matière plastique et que la zone de rupture obligée (41, 42) est conçue en tant que rainure moulée ou découpée.

3. Carte d'accès selon la revendication 1, **caractérisée en ce qu'**elle est découpée à partir d'un rouleau de matière et que des portions de la zone de rupture obligée (4) sont libérées par découpage.

4. Carte d'accès selon la revendication 1, **caractérisée en ce qu'**elle est exécutée en plusieurs couches (10, 11, 12) par laminage et que, le long de la zone de rupture obligée (40), l'une des couches (1, 12), au moins, est détachée et que l'une des couches (10), au moins, s'étend sans interruption sur la zone de rupture obligée (40).

5. Carte d'accès selon l'une des revendications précédentes, **caractérisée en ce que** le talon (F1A) entoure, au moins, un coin de la carte d'accès (1) et présente soit plusieurs zones de rupture obligée (43 - 45), qui ne sont pas disposées en ligne droite, soit seulement une ligne de rupture obligée qui s'étend sur une ligne coudée.

6. Carte d'accès selon la revendication 5, **caractérisée en ce que** le talon (F1A) contourne, au moins, un coin arrondi (R) de l'angle de la carte d'accès (1) et se termine en alignement avec l'un des bords de la carte d'accès, qui fait suite à l'angle en question.
